# EUROPEAN PATENT APPLICATION

(11) **EP 2 990 701 A1**
(43) Date of publication of application: **02.03.2016**
(21) Application number: 14183058.8
(22) Date of filing: 01.09.2014
(51) Int. Cl.: F16K 1/12, F16K 27/10, F16K 31/04

(54) **A valve with a welded valve housing**

(71) Applicant: Danfoss A/S, 6430 Nordborg (DK)
(72) Inventor: Pawlik, Jens, 6310 Broager (DK); Larsen, Sigurd, 20255 Hamburg (DE); Harck, Kurt, 6400 Sønderborg (DK)

(57) **Abstract**

A valve (1) comprising a first housing part (2) and a second housing part (3), the first housing part (2) and the second housing part (3) being made from a sheet metal material, and being joined by means of welding, preferably laser welding, to form a closed housing of the valve (1). An actuator (9) is arranged inside the housing for driving movements of a first valve member (7) and/or a second valve member (8), said actuator (9) being arranged directly in a flow of fluid flowing in the fluid flow path during operation of the valve (1). The valve (1) is hermetically sealed due to the welding of the housing parts (2, 3).

## Description

### FIELD OF THE I NVENTI ON

The present invention relates to a valve comprising a first housing part and a second housing part, which are joined together to form a closed valve housing. The valve of the invention is hermetically sealed, and is easy and cost effective to manufacture.

### BACKGROUND OF THE I NVENTI ON

Valve housings are often made from parts which are machined, e.g. from brass material. Other parts of the valve, such as connectors and actuator casings, may be made from a material which is different from the material of the valve housing. Accordingly, various parts of the valve are assembled either by means of soldering or by means of mechanical connections, such as screw connections including a sealing member, such as a gasket and/or an o-ring.

In the case that a soldering technique is used, heating of the entire valve is required, and this has the consequence, that only materials which are able to withstand the required temperatures can be used for any parts of the valve. For instance, this rules out the use of plastic parts.

In the case that mechanical connections are used, there is a risk of leaks occurring in the valve. This is particularly an issue if the valve is operated at high pressure levels.

US 8,136,543 B2 discloses an axial flow control valve including a valve body defining a passageway between an inlet and an outlet that is substantially parallel to a fluid flow path at the inlet and the outlet of the valve body. The control valve includes a cartridge assembly removably coupled to the valve body and disposed within the passageway of the valve body between the inlet and the outlet. The cartridge assembly is substantially axially aligned with the passageway and includes a motor to operate the axial flow control valve between a first position to prevent the flow of fluid between the inlet and the outlet and a second position to allow the flow of fluid between the inlet and the outlet.

### DESCRIPTION OF THE INVENTION

It is an object of embodiments of the invention to provide a valve which is hermetically sealed, even at high pressure levels.

It is a further object of embodiments of the invention to provide a valve which is easy and cost effective to manufacture.

The invention provides a valve comprising:
- a first housing part and a second housing part, the first housing part and the second housing part forming a closed housing of the valve,
- an inlet connector arranged to receive fluid from a fluid flow line to an interior part of the closed housing, and an outlet connector arranged to deliver fluid to the fluid flow line from the interior part of the closed housing, a fluid flow path through the valve thereby being defined, the fluid flow path providing a fluid connection from the inlet connector to the outlet connector,
- a first valve member and a second valve member arranged inside the housing, the first valve member and the second valve member being movable relative to each other, and the first valve member and the second valve member defining a fluid passage arranged in the fluid flow path, a size of the fluid passage being determined by a relative position of the first valve member and the second valve member,
- an actuator arranged inside the housing for driving movements of the first valve member and/or the second valve member, said actuator being arranged directly in a flow of fluid flowing in the fluid flow path during operation of the valve,
wherein the first housing part and the second housing part are made from a sheet metal material, and wherein the first housing part and the second housing part have been joined to form the closed housing by means of welding.

The valve according to the invention comprises a first housing part and as second housing part which together form a closed housing of the valve. Thus, when the first housing part and the second housing part are attached to each other, a closed cavity is defined with the first housing part and the second housing part forming the walls surrounding the closed cavity, the closed cavity forming an interior part of the closed housing.

The valve further comprises an inlet connector and an outlet connector. The inlet connector is arranged to receive fluid from a fluid flow line, into which the valve is connected, and to convey the fluid to the interior part of the closed housing. Similarly, the outlet connector is arranged to deliver fluid from the interior of the closed housing to the fluid flow line.

Thus, a fluid flow path is defined through the valve, from the inlet connector to the outlet connector, through the interior part of the closed housing. During operation of the valve, fluid flows in the fluid flow path.

In the present context the term 'fluid' should be interpreted to cover a liquid, a gas or a mixture of liquid or gas.

The valve further comprises a first valve member and a second valve member arranged in the interior part of the closed housing. The first valve member and the second valve member are movable relative to each other. This could, e.g., be obtained by the first valve member being movable relative to the closed housing, while the second valve member remains fixed relative to the closed housing. As an alternative, the second valve member may be movable relative to the closed housing, while the first valve member remains fixed relative to the first housing. As another alternative, the first valve member as well as the second valve member may be movable relative to the closed housing, in such a manner that the relative position of the first valve member and the second valve member changes. In any event, the relative position of the first valve member and the second valve member can be changed or adjusted, due to the relative movements.

The first valve member and the second valve member define a fluid passage arranged in the fluid flow path. Thus, fluid flowing through the valve, via the fluid flow path from the inlet connector to the outlet connector, passes through the fluid passage.

A size of the fluid passage is determined by a relative position of the first valve member and the second valve member. Thus, when the first and/or the second valve member is/are moved, and the relative position of the first valve member and the second valve member is thereby changed or adjusted, the size of the fluid passage is also adjusted. Thereby the fluid flow through the fluid flow path is also adjusted. A specific relative position of the first valve member and the second valve member may advantageously define a closed position of the valve, where fluid is prevented from passing the fluid passage, and thereby from passing through the valve.

The valve further comprises an actuator arranged inside the housing for driving movements of the first valve member and/or the second valve member. The actuator is arranged directly in a flow of fluid flowing in the fluid flow path during operation of the valve. Thereby the fluid flowing through the valve during operation flows directly past the actuator. The actuator may thereby be cooled by means of the fluid flowing through the valve. Furthermore, arranging the actuator directly in the fluid flow allows an axial or in-line design of the valve, where the direction of the fluid flow through the valve is substantially linear through the entire valve from the inlet connector to the outlet connector. The actuator does not protrude from the valve housing, and it is not arranged in a separate housing part. This provides a compact design of the valve, and the risk of leaks occurring is reduced, because fewer parts need to be joined to each other.

The first housing part and the second housing part are made from a sheet metal material. This is an inexpensive material, and the manufacturing costs of the valve are therefore reduced as compared to a valve where the valve housing is made from machined brass. Furthermore, the valve can be made with a reduced wall thickness, and thereby the weight of the valve can be reduced.

The first housing part and the second housing part have been joined to form the closed housing by means of welding. This is possible because the first housing part and the second housing part are made from a sheet metal material. Thus, the first housing part and the second housing part are joined in an irreversible and permanent manner, in the sense that once the first housing part and the second housing part have been joined to each other, it is not possible to separate them again, thereby gaining access to the interior part of the closed housing, without breaking the valve housing.

The welding provides a hermetic seal between the first housing part and the second housing part. Thereby the risk of leaks occurring in the valve is reduced, as compared to a valve where the housing parts have been joined in a reversible manner, such as by means of a mechanical connection. Furthermore, when using a welding technique, heating only occurs locally, so only the areas where welding is performed, and areas immediately adjacent thereto, are heated to high temperatures. Thereby it is possible to use materials, which are not capable of withstanding high temperatures, for parts of the valve which are not in immediate contact with the welding zones.

The first housing part and the second housing part may have been joined to form the closed housing by means of laser welding. During laser welding, heating only occurs very locally within the welding zone. Accordingly, this is a very suitable welding technique for the valve according to the invention.

The first housing part and/or the second housing part may be made from deep drawn sheet metal material. Deep drawing is a sheet metal forming process, in which a sheet metal blank is radially drawn into forming a die by the mechanical action of a punch. The process is considered 'deep' drawing when the depth of the drawn part exceeds its diameter. This may be achieved by redrawing the part through a series of dies. It is possible to manufacture even very complex shapes by means of deep drawing. Any desired shape of the housing parts may thereby be obtained in an easy and cost effective manner.

Other parts of the valve may also be made from deep drawn sheet metal material. Examples of such parts include, but are not limited to, the inlet connector, the outlet connector, the first valve member, the second valve member, encapsulations arranged inside the closed housing, frame parts arranged inside the closed housing, etc.

The first valve member, the second valve member and the actuator may be assembled to form a valve cartridge, and the valve cartridge may be attached to the first housing part or the second housing part by means of welding. According to this embodiment all, or almost all, of the parts which are arranged inside the closed housing, are preassembled before they are arranged inside the closed housing. In particular, all of the parts which provide the valve operations of the valve, i.e. the first valve member, the second valve member and the actuator, are preassembled in this manner. This allows the assembly containing these parts to be tested prior to or during assembling of the valve, e.g. with respect to internal leaks and operation of the valve. This reduces the risk of failure of the assembled valve.

By welding the valve cartridge to the first housing part or the second housing part, it can be ensured that the valve cartridge is properly positioned inside the closed housing, e.g. with respect to aligning the parts of the valve with respect to each other. For instance, the valve cartridge may be welded onto a housing part by welding one of the valve members to the housing part.

The valve cartridge may be supported by the second housing part or the first housing part via one or more biased support legs. According to this embodiment, the valve cartridge may be supported by, but not attached to, the housing part which the valve cartridge is not welded onto. For instance, one end of the valve cartridge may be welded onto one of the housing parts, and an opposite end of the valve cartridge may be supported by the other one of the housing parts via the one or more biased support legs. Thereby any misalignments, stress or tension which may occur between the valve housing and the valve cartridge can be absorbed or counteracted by the biased support legs. Thereby alignment of the components of the valve cartridge and the valve housing can be ensured. Furthermore, the valve can be assembled in an easy and reliable manner by welding the cartridge onto one of the housing parts, and then simply slipping to other housing over the cartridge.

The inlet connector and/or the outlet connector may be attached to the first housing part or the second housing part by means of welding. According to this embodiment, the inlet connector and/or the outlet connector is/are manufactured as a separate part, e.g. by means of deep drawing, and subsequently attached to a relevant housing part by means of welding. As described above, using a welding technique reduces the risk of leaks occurring in the valve.

By manufacturing the inlet connector and/or the outlet connector as a separate part has the advantage that the valve housing can be manufactured as a standard housing, and connectors of an appropriate size can be attached to the valve housing, in order to meet the specific requirements with respect to flow through the valve. For instance, in the case that the valve is to be used as a pure gas valve, an inlet connector and an outlet connector of the same size may advantageously be selected. On the other hand, in the case the valve is to be used as an expansion valve, an inlet connector having a smaller cross sectional area than the cross sectional area of the outlet connector may advantageously be selected. Furthermore the size of the inlet connector as well as the size of the outlet connector may be selected in accordance with the expected flow rate through the valve and/or in accordance with the size of piping in the fluid flow line which the valve is connected to.

The first valve member may comprise one or more orifices and the second valve member may comprise one or more closing elements being arranged to cover a part of the one or more orifices, and the relative position of the first valve member and the second valve member may determine a portion of the one or more orifices being covered by the one or more closing elements of the second valve member.

According to this embodiment, the fluid passage of the first and second valve members is defined by the orifices and the closing elements. When the first valve member and the second valve member move relative to each other, the orifices and the closing elements are also moved relative to each other. Accordingly, the portion of the orifices being covered by the closing elements is thereby changed, thereby changing the size of the fluid passage. When the orifices are completely covered by the closing elements, fluid is prevented from passing through the orifices, and the valve is thereby closed.

The first valve member and/or the second valve member may be a cup shaped member. In the present context the term 'cup shaped' should be interpreted to mean a substantially cylindrical shape which is closed at one end.

The one or more orifices may have a substantially rectangular shape. This provides a substantially linear opening characteristic of the valve, because a linear, sliding movement of the covering members along the rectangular orifices will result in a linear change in the uncovered area of the orifices.

As an alternative, any other suitable shape of the orifices may be selected, in order to provide a desired opening characteristic of the valve. Thus, the orifices may, e.g., be circular, triangular, quadratic, oval, drop-shaped, etc.

The first valve member and/or the second valve member may be adapted to perform sliding movements. According to this embodiment, the relative movement of the first valve member and the second valve member is of a sliding kind.

The valve may further comprise a first sealing member arranged to provide sealing between the first valve member and the second valve member at an outlet side of the fluid passage, and a second sealing member arranged to provide sealing between the first valve member and the second valve member at an inlet side of the fluid passage.

The first sealing member and the second sealing member prevent internal leaks of the valve during operation, in particular when the valve is in a closed position.

The first sealing member may be arranged to provide sealing between the first valve member and the second valve member only when the valve is in a closed position.

The second valve member may be linearly movable with respect to the first valve member, and forces acting on the second valve member, due to a pressure prevailing at a high pressure region in the valve, along a first direction of movement and along a second, opposite, direction of movement of the second valve member may be substantially equal.

During operation of an expansion valve, a pressure drop in the fluid passing through the valve occurs across the mechanism which controls the valve operation and provides the expansion of the fluid. In the valve according to the invention, this mechanism is formed by the fluid passage defined by the first valve member and the second valve member. When the valve is in a closed position, i.e. no fluid is allowed to pass through the valve, a differential pressure may build up across the closed fluid passage. This has the consequence that when it is desired to open the valve, a force originating from the high pressure acting on various parts of a valve member being moved, must be overcome by the actuator driving the movements of the first valve member and/or the second valve member.

By designing the second valve member in such a manner that the forces acting on the second valve member, due to a pressure prevailing at a high pressure region in the valve, along a first direction of movement and along a second, opposite, direction of movement of the second valve member are substantially equal, these forces balance each other, and therefore there will be no additional force to overcome by the actuator. This provides a perfectly balanced valve, regardless of the prevailing pressure in the valve.

The second valve member may define an end part, and the end part of the second valve member may be tapered in a direction towards the first valve member. This is one way of obtaining that the forces acting on the second valve member, due to the high pressure in the valve, are balanced, and this will be explained in further detail below.

The actuator may comprise a spindle connected to the first valve member or the second valve member, and movements of the spindle may cause movements of the first valve member or the second valve member. According to this embodiment, rotational movements of the actuator may be transferred into linear movements of the first valve member or the second valve member, via the spindle, and possible a threaded nut arranged at the relevant valve member. An anti-rotation mechanism may be provided which prevents the first valve member or the second valve member from performing rotational movements when the rotating movements of the spindle are transferred to the first valve member and the second valve member. Such an anti-rotation mechanism may, e.g., include a groove formed in a wall part of the relevant valve member, the groove extending along the direction of the linear movements, and an engaging member formed on a stationary part, e.g. a frame part, the engaging member being arranged in engagement with the groove.

The valve may further comprise an encapsulation of at least a part of the actuator, said encapsulation providing shielding of at least a part of the actuator against a direct fluid flow of fluid flowing through the fluid flow path during operation of the valve. The fluid flowing through the valve may carry various impurities, e.g. in the form of particles and/or larger fragments. Such impurities may cause damage to the actuator, and/or may be the cause of short circuiting of the actuator in the case that they are allowed to reach the actuator. Accordingly, protecting the actuator against a direct fluid flow prevents that impurities carried by the fluid reaches the actuator, and thereby the actuator is protected against damage. The encapsulation may, e.g., be in the form of a shield arranged upstream relative to the actuator, the shield being adapted to guide the fluid past the actuator.

The actuator may comprise a stepper motor. As an alternative, other suitable kinds of motors may be used.

The valve according to the invention may, e.g., be assembled in the following manner. Initially, the first valve member and the second valve member are arranged adjacent to each other. In the case that the first valve member and the second valve member are cup shaped, one valve member may be arranged inside the other. Next, the valve members may be mounted on a frame part, which is in turn mounted on an actuator. Thereby the first valve member, the second valve member, the frame and the actuator form a valve cartridge, comprising all operational parts of the valve. The valve cartridge may then be tested, e.g. with respect to operation and/or with respect to leaks.

The valve cartridge may then be positioned inside the first housing part, and the first valve part may be welded onto the first housing part. This ensures that the components of the valve cartridge are properly mounted and aligned inside the first housing part, and with respect to the fluid flow path through the valve.

Then the second housing part is joined to the first housing part by means of welding, in such a manner that the second valve part also covers the components of the valve cartridge. Thereby a closed valve housing is formed with the components of the valve cartridge arranged in an interior part of the closed valve housing.

Then an inlet connector and an outlet connector are attached to the closed valve housing by means of welding. Furthermore, a sight glass and/or an electrical connector may be attached to the closed valve housing, preferably by means of welding.

### BRIEF DESCRIPTION OF THE DRAWINGS

The invention will now be described in further detail with reference to the accompanying drawings, in which
Fig. 1 is a cross sectional view of a valve according to a first embodiment of the invention,
Fig. 2 is a cross sectional view of a valve according to a second embodiment of the invention,
Fig. 3 is an end view of a first valve member and a second valve member for a valve according to an embodiment of the invention,
Fig. 4 is a cross sectional view of the first valve member and the second valve member of Fig. 3, along the line A-A, and
Fig. 5 shows two details of the first valve member and second valve member of Figs. 3 and 4.

### DETAI LED DESCRI PTI ON OF THE DRAWINGS

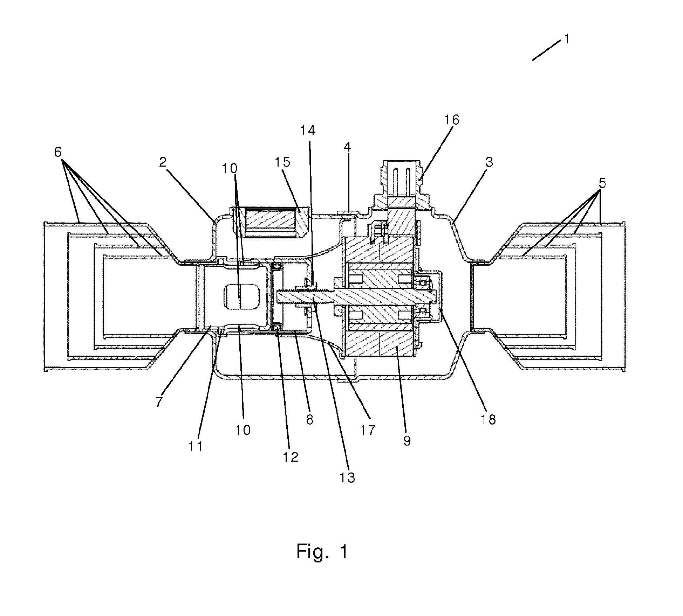

Fig. 1 is a cross sectional view of a valve 1 according to a first embodiment of the invention. The valve 1 comprises a first housing part 2 and a second housing part 3 which have been joined to form a closed valve housing by means of laser welding along a connecting zone 4. Thereby it is ensured that the valve housing is hermetically sealed. The first housing part 2 and the second housing part 3 are made from deep drawn sheet metal.

An inlet connector 5 and an outlet connector 6 are attached to the valve housing, also by means of laser welding. In Fig. 1 several inlet connectors 5 and several outlet connectors 6 are shown, in order to illustrate that an inlet connector 5 and an outlet connector 6 of an appropriate size can be selected and welded onto the valve housing. The inlet connector 5 and the outlet connector 6 are arranged to be connected to a fluid flow line in such a manner that the inlet connector 5 receives fluid from the fluid flow line and the outlet connector 6 delivers fluid to the flow line. A fluid flow path through the valve 1 is thereby defined, from the inlet connector 5 to the outlet connector 6, via the interior part of the closed valve housing.

It should be noted that the valve 1 may be a bi-flow valve, i.e. a valve 1 where flow in both directions through the valve 1 is possible. When reversing the flow direction through the valve 1, the inlet connector 5 will act as an outlet connector, and the outlet connector 6 will act as an inlet connector.

A first valve member 7, a second valve member 8 and an actuator 9 are arranged in the interior part of the closed valve housing. The first valve member 7 and the second valve member 8 are both in the form of a cup shaped member, and the second valve member 8 is arranged to slide along an outer part of a side wall of the first valve member 7. Thereby the first valve member 7 and the second valve member 8 perform relative movements. The first valve member 7, the second valve member 8 and the actuator 9 are arranged directly in the fluid flow path through the valve 1 from the inlet connector 5 to the outlet connector 6, and the actuator 9 thereby comes directly into contact with fluid flowing through the valve 1. The first valve member 7 is attached to the first housing part 2 by means of laser welding.

The first valve member 7 is provided with a number of rectangular orifices 10 formed in the side wall. When the second valve member 8 slides along the first valve member 7, the second valve member 8 covers a varying portion of the orifices 10. Thereby the side wall of the second valve member 8 forms a closing element, and the orifices 10 and the second valve member 8 in combination define a fluid passage, the size of the fluid passage being determined by the relative position of the first valve member 7 and the second valve member 8.

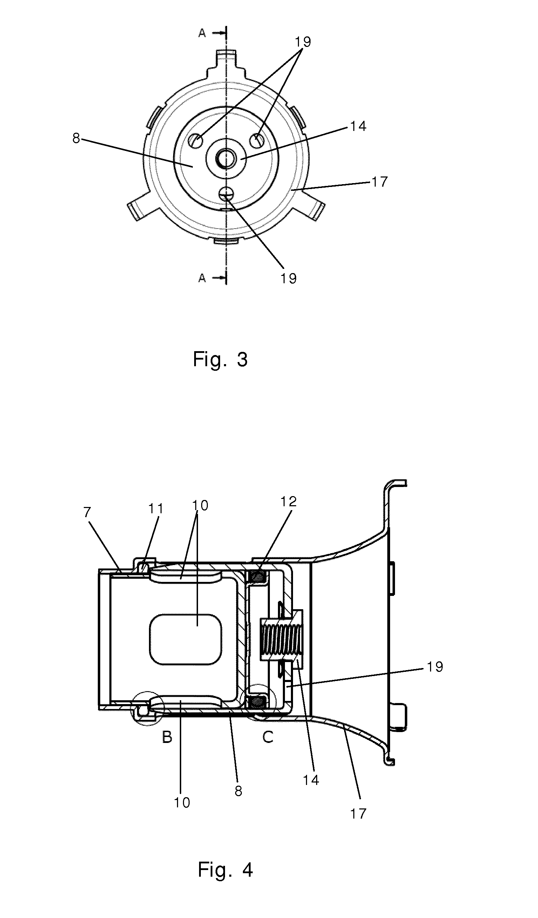

A first sealing member 11 and a second sealing member 12 are arranged to provide sealing between the first valve member 7 and the second valve member 8. Thereby internal leaks in the valve 1 are prevented. The sealing members 11, 12 will be described in further detail below with reference to Figs. 3-5.

The actuator 9 comprises a spindle 13 which is arranged in engagement with a threaded nut 14 attached to the second valve member 8. Thus, when the actuator 9 rotates the spindle 13, the second valve member 8 is caused to perform a linear movement. Accordingly, the actuator 9 provides the relative movements of the first valve member 7 and the second valve member 8, via the spindle 13 and the nut 14.

A sight glass 15 is attached to the closed valve housing by means of laser welding. Accordingly, the hermetic properties of the closed valve housing are not compromised by the sight glass 15. The sight glass 15 is arranged at a position which allows the first valve member 7 and the second valve member 8 to be inspected. Thereby it can easily be determined whether or not the valve 1 is operating properly.

An electrical connector 16 is also attached to the closed valve housing by means of laser welding. Accordingly, the hermetic properties of the closed valve housing are not compromised by the electrical connector 16. The electrical connector 16 is arranged at a position corresponding to the position of the actuator 9. Thereby power can be supplied to the actuator 9 via the electrical connector 16.

The second valve member 8 is mounted slidingly on a frame 17, which is also attached to the actuator 9. The frame 17 is further supported by the valve housing. Furthermore, the first valve member 7 is attached to the frame 17. Thereby alignment of the first valve member 7 and the second valve member 8 in the fluid flow path is ensured. Furthermore, the frame 17 shields the actuator 9 against the direct flow of fluid passing through the valve 1.

The first valve member 7, the second valve member 8, the frame 17 and the actuator 9, when assembled as described above, form a valve cartridge including all of the operational parts of the valve 1. The valve cartridge may be preassembled and tested before being mounted inside the valve housing. This minimises the risk of the valve 1 being faulty or in-operational.

The valve 1 may, e.g., be operated in the following manner. Fluid is received at the inlet connector 5 and enters the interior part of the closed valve housing. The fluid flows past the actuator 9, thereby providing cooling for the actuator 9 in the case that this is required. A protective cap 18 shields the actuator 9 from the direct flow of fluid.

The fluid then passes along an outer side of the frame 17, the second valve member 8 and the first valve member 7. The position of the second valve member 8, relative to the first valve member 7, has been set by means of the actuator 9, the spindle 13 and the nut 14, in such a manner that the uncovered portion of the orifices 10 formed in the first valve member 7 defines a desired opening degree of the valve 1.

The fluid then flows through the orifices 10 to an interior part of the first valve member 7. Finally, the fluid leaves the valve 1 via the outlet connector 6.

When the second valve member 8 is arranged in a position where an edge of the cup shaped second valve member 8 abuts the first sealing member 11, the valve 1 is in a closed position, where no fluid is allowed to pass through the orifices 10, and no fluid is thereby allowed to pass through the valve 1. The first sealing member 11 and the second sealing member 12, in this situation, ensure that fluid is not allowed to leak through the valve 1.

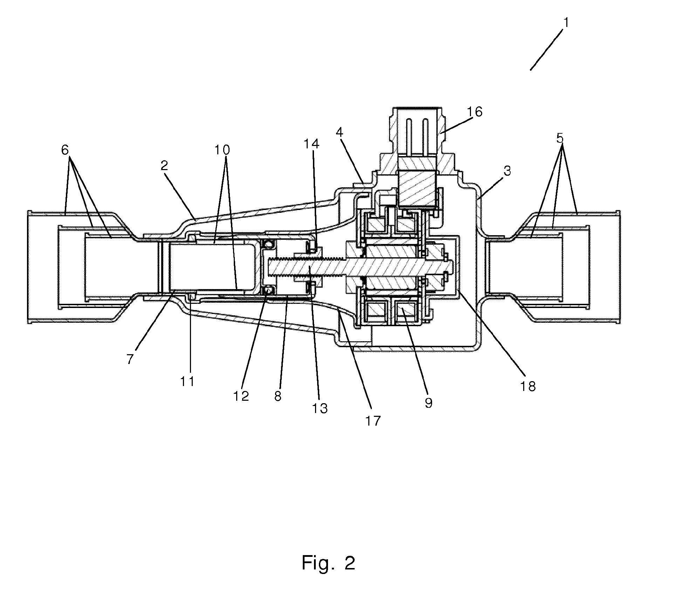

Fig. 2 is a cross sectional view of a valve 1 according to a second embodiment of the invention. The valve 1 of Fig. 2 is very similar to the valve 1 of Fig. 1, and it will therefore not be described in detail here.

In the valve 1 of Fig. 2, the closed valve housing is smaller and slimmer than the valve housing of the valve 1 of Fig. 1. Thereby the valve 1 of Fig. 2 is more compact than the valve 1 of Fig. 1, and the valve 1 of Fig. 2 may therefore be used in applications where the available space is limited. Furthermore, the manufacturing costs are reduced.

In the valve 1 of Fig. 2 the sight glass has been omitted, in order to allow for the slimmer design of the closed valve housing, and in order to keep the manufacturing costs at a low level. The operation of the valve 1 of Fig. 2 is essentially as described above with reference to Fig. 1.

Fig. 3 is an end view of a first valve member (not visible) and a second valve member 8 for a valve according to an embodiment of the invention. The first valve member and the second valve member 8 of Fig. 3 may, e.g., form part of the valve 1 of Fig. 1 or the valve 1 of Fig. 2.

In Fig. 3 the second valve member 8 is mounted slidingly on a frame 17. Three openings 19 are formed in the closed end of the second valve member 8, thereby allowing fluid to pass through the closed end of the second valve member 8. This ensures that the same pressure level prevails on both sides of the closed end of the second valve member 8.

Fig. 4 is a cross sectional view of the first valve member 7 and the second valve member 8 of Fig. 3, along the line A-A indicated in Fig. 3. It can be seen in Fig. 4 that the first valve member 7 is arranged inside the second valve member 8, and that the second valve member 8 is mounted slidingly on a frame 17. The second valve member 8 is capable of performing sliding movements relative to the first valve member 7, which is attached to the frame 17, and the frame 17 along a substantially axial direction. The movements of the second valve member 8 are caused by an actuator, via a spindle arranged in engagement with an inner thread of a threaded nut 14 attached to the second valve member 8.

The first valve member 7 is provided with a number of orifices 10 formed in a side wall of the first valve member 7. During operation, fluid flows through the orifices 10. The position of the second valve member 8 relative to the first valve member 7 determines the portions of the orifices 10 which are covered and uncovered, respectively, by the second valve member 8. Accordingly, the size of a fluid passage defined by the orifices 10 and the second valve member 8, and thereby an opening degree of the valve, is determined by the relative position of the first valve member 7 and the second valve member 8. In Fig. 4 the second valve member 8 is arranged in a position where the orifices 10 are completely covered by the second valve member 8. Accordingly, the valve is in a closed position, i.e. fluid is not allowed to pass through the orifices 10.

A first sealing member 11 and a second sealing member 12 are arranged between the first valve member 7 and the second valve member 8, in order to provide sealing between the first valve member 7 and the second valve member 8, thereby preventing internal leaks of the valve. In the closed position of the valve illustrated in Fig. 4 an edge of the second valve member 8 abuts the first sealing member 11, thereby efficiently preventing fluid from passing through the orifices 10 of the first valve member 7. The edge of the second valve member 8 is tapered in a direction towards the first valve member 7.

The first sealing member 11 defines a first diameter as the diameter of the contact point between the edge of the second valve member 8 and the first sealing member 11. Similarly, the second sealing member 12 defines a second diameter as the diameter of the contact point between a side wall of the second valve member 8 and the second sealing member 12. Since the edge of the second valve member 8 is tapered in a direction towards the first valve member 7, the inner diameter of the second valve member 8, i.e. the diameter of the second valve member 8 which faces the first valve member 7, is substantially the same along the length of the second valve member 8, between the first sealing member 11 and the second sealing member 12. Therefore the first diameter and the second diameter are substantially identical.

During operation of the valve, a high pressure is prevailing in the fluid flowing through the valve at the right hand side of the Figure, i.e. at the closed ends of the first valve member 7 and the second valve member 8. Furthermore, the high pressure is prevailing along the outer surface of the second valve member 8. However, inside the first valve member 7 a lower pressure is prevailing. Accordingly, a differential pressure exists across the orifices 10, or across the second valve member 8 in the closed position illustrated in Fig. 4.

Due to the tapered shape of the edge of the second valve member 8, a force due to the high pressure acts on the second valve member 8, at the tapered edge, in a direction from left to right in Fig. 4. However, because the first diameter defined by the first sealing member 11 is equal to the second diameter defined by the second sealing member 12, this force is substantially equal to a force acting on the second valve member 8, due to the high pressure, in an opposite direction, i.e. from right to left in Fig. 4. Thereby the forces acting on the second valve member 8, due to the high pressure, are automatically balanced. Thereby, when it is desired to open the valve by moving the second valve member 8 towards the right in Fig. 4, it is not necessary to overcome any additional forces originating from the pressure acting on the second valve member 8. Accordingly, the valve is naturally balanced, and less force is required for opening the valve.

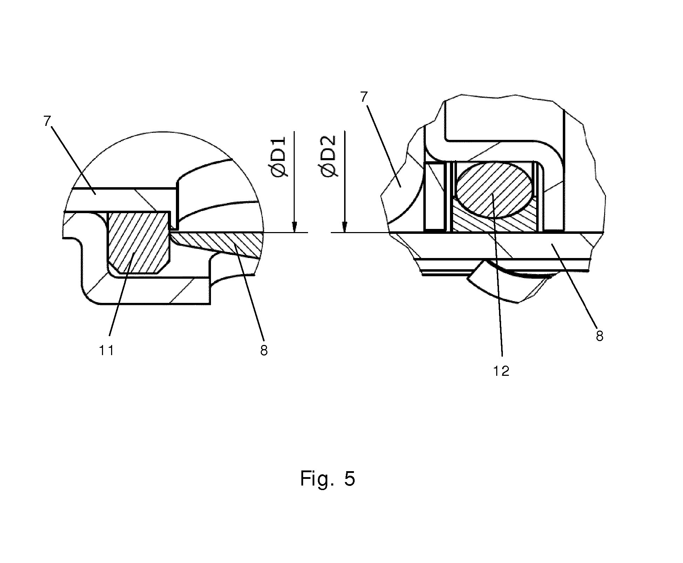

Fig. 5 shows two details of the first valve member 7 and the second valve member 8 of Figs. 3 and 4, indicated by B and C in Fig. 4. Thus, Fig. 5 shows the first sealing member 11 and the second sealing member 12 in greater detail. It is clear from Fig. 5 that the diameter defined by the first sealing member 11 is equal to the diameter defined by the second sealing member 12, resulting in the balancing of forces described above with reference to Fig. 4.

## Claims

1. A valve (1) comprising:
- a first housing part (2) and a second housing part (3), the first housing part (2) and the second housing part (3) forming a closed housing of the valve (1),
- an inlet connector (5) arranged to receive fluid from a fluid flow line to an interior part of the closed housing, and an outlet connector (6) arranged to deliver fluid to the fluid flow line from the interior part of the closed housing, a fluid flow path through the valve thereby being defined, the fluid flow path providing a fluid connection from the inlet connector (5) to the outlet connector (6),
- a first valve member (7) and a second valve member (8) arranged inside the housing, the first valve member (7) and the second valve member (8) being movable relative to each other, and the first valve member (7) and the second valve member (8) defining a fluid passage arranged in the fluid flow path, a size of the fluid passage being determined by a relative position of the first valve member (7) and the second valve member (8),
- an actuator (9) arranged inside the housing for driving movements of the first valve member (7) and/or the second valve member (8), said actuator (9) being arranged directly in a flow of fluid flowing in the fluid flow path during operation of the valve (1),
wherein the first housing part (2) and the second housing part (3) are made from a sheet metal material, and wherein the first housing part (2) and the second housing part (3) have been joined to form the closed housing by means of welding.

2. A valve (1) according to claim 1, wherein the first housing part (2) and the second housing part (3) have been joined to form the closed housing by means of laser welding.

3. A valve (1) according to claim 1 or 2, wherein the first housing part (2) and/or the second housing (3) part is/are made from deep drawn sheet metal material.

4. A valve (1) according to any of the preceding claims, wherein the first valve member (7), the second valve member (8) and the actuator (9) are assembled to form a valve cartridge, and wherein the valve cartridge is attached to the first housing part (2) or the second housing part (3) by means of welding.

5. A valve (1) according to claim 4, wherein the valve cartridge is supported by the second housing part (3) or the first housing part (2) via one or more biased support legs.

6. A valve (1) according to any of the preceding claims, wherein the inlet connector (5) and/or the outlet connector (6) is/are attached to the first housing part (2) or the second housing part (3) by means of welding.

7. A valve (1) according to any of the preceding claims, wherein the first valve member (7) comprises one or more orifices (10) and the second valve member (8) comprises one or more closing elements being arranged to cover a part of the one or more orifices (10), and wherein the relative position of the first valve member (7) and the second valve member (8) determines a portion of the one or more orifices (10) being covered by the one or more closing elements of the second valve member (8).

8. A valve (1) according to claim 7, wherein the first valve member (7) and/or the second valve member (8) is/are a cup shaped member.

9. A valve (1) according to claim 7 or 8, wherein the one or more orifices (10) has/have a substantially rectangular shape.

10. A valve (1) according to any of the preceding claims, wherein the first valve member (7) and/or the second valve member (8) is/are adapted to perform sliding movements.

11. A valve (1) according to any of the preceding claims, further comprising a first sealing member (11) arranged to provide sealing between the first valve member (7) and the second valve member (8) at an outlet side of the fluid passage, and a second sealing member (12) arranged to provide sealing between the first valve member (7) and the second valve member (8) at an inlet side of the fluid passage.

12. A valve (1) according to claim 11, wherein the first sealing member (11) is arranged to provide sealing between the first valve member (7) and the second valve member (8) only when the valve (1) is in a closed position.

13. A valve (1) according to any of the preceding claims, wherein the second valve member (8) is linearly movable with respect to the first valve member (7), and wherein forces acting on the second valve member (8), due to a pressure prevailing at a high pressure region in the valve (1), along a first direction of movement and along a second, opposite, direction of movement of the second valve member (8) are substantially equal.

14. A valve (1) according to claim 13, wherein the second valve member (8) defines an end part, and wherein the end part of the second valve member (8) is tapered in a direction towards the first valve member (7).

15. A valve (1) according to any of the preceding claims, wherein the actuator (9) comprises a spindle (13) connected to the first valve member (7) or the second valve member (8), and wherein movements of the spindle (13) causes movements of the first valve member (7) or the second valve member (8).

16. A valve (1) according to any of the preceding claims, further comprising an encapsulation (17, 18) of at least a part of the actuator (9), said encapsulation (17, 18) providing shielding of at least a part of the actuator (9) against a direct fluid flow of fluid flowing through the fluid flow path during operation of the valve (1).

17. A valve (1) according to any of the preceding claims, wherein the actuator (9) comprises a stepper motor.
